# EUROPÄISCHE PATENTSCHRIFT

(11) **EP 2 715 248 B1**
(45) Veröffentlichungstag und Bekanntmachung des Hinweises auf die Patenterteilung: **26.12.2018**
(21) Anmeldenummer: 12745996.4
(22) Anmeldetag: 25.05.2012
(51) Int. Cl.: F24S 40/10

(54) **Anordnung**
Arrangement
Arrangement

(30) Priorität: 26.05.2011 DE 102011103304; 03.10.2011 DE 102011115474
(43) Veröffentlichungstag der Anmeldung: 09.04.2014
(73) Patentinhaber: machtWissen.de AG, 28219 Bremen (DE)
(72) Erfinder: HOLZE, Carsten, 10785 Berlin (DE)
(74) Vertreter: Eisenführ Speiser
(86) Internationale Anmeldenummer: PCT/DE2012/000572
(87) Internationale Veröffentlichungsnummer: WO 2012/159611

(56) Entgegenhaltungen:
- EP-A1- 2 520 875
- EP-A2- 2 366 965
- WO-A2-2009/140234
- WO-A2-2010/109508
- DE-A1- 10 351 675
- DE-A1-102010 014 016

## Beschreibung

Die vorliegende Erfindung betrifft eine Anordnung aus einem solaren Kollektormodul, bestehend aus reflektierenden oder absorbierenden Modulen, und einer Vorrichtung zum Schutz des solaren Kollektormoduls. Sie dient zur Optimierung und Betriebsstabilisierung der auftretenden umweltspezifischen Belastungen und Reaktionsmomente an reflektierenden und absorbierenden Solarkollektoren sowie daraus zusammengesetzter Modulgruppen.

Darüber hinaus werden durch die Vorrichtung der erfindungsgemäßen Anordnung zum Schutz reflektierender und absorbierender Sonnenkollektoren vor umweltbedingten Belastungen die Umströmung bzw. Durchströmung einzelner Kollektormodule oder auch zusammengesetzter Kollektormodulgruppen und -felderoptimiert und somit die Anlagenwirkungsgrade optimiert.

### Stand derTechnik

Solare Kraftwerke nutzen in der Regel konzentrierende, absorbierende oder reflektierende Module in Einzelkonfiguration, meist allerdings in Feldkonfiguration, d.h. in Zusammenstellung mehrerer Einzelmodule. Diese Module wandeln die solare Einstrahlung direkt, z.B. durch photovoltaische Zellen, oder indirekt, z.B. durch Umwandlung der thermischen Energie mittels Kreisprozess, in elektrische Energie.

In EP 2 366 965 A2 wird ein solares Modul offenbart, das mit einer Windfahne zum Wind ausgerichtet wird. EP 2 520 875 A1 offenbart ein horizontal rotierbares solares Modul, wobei die Rotation in Abhängigkeit der Windstärke erfolgt.

WO 2010/109508 A2 offenbart ein solares Modul, das eine zusätzliche verstellbare Reflexionsfläche aufweist, um zusätzlich zu den vorhandenen Reflektoren Sonnenlicht auf die vorhandenen Reflektoren und von Thermofluid durchflossene Röhren zu lenken.

Erste Entwicklungen der solarthermischen Anwendungen lassen sich bereits Anfang des letzten Jahrhunderts finden. Sowohl in Afrika als auch den Vereinigten Staaten von Amerika sind hier erste Kollektormodelle bzw. Anlagen zur Nutzung der solaren Einstrahlung entwickelt worden. Diese wurden meist ausschließlich zur Erzeugung bzw. Nutzung der thermischen Energie eingesetzt. So beschreibt das Patent US 1,989,999 vom 07.06.1933 grundsätzlich den Aufbau eines thermischen Röhrenkollektors, der sich bis
heute im Aufbau prinzipiell nur unwesentlich geändert hat. Geändert haben sich in hohem Maße aber die Ausführungsgrößen und die Leistung der Anlagen, um so durch hohe Einstrahlungsleistung, korreliert annähernd mit der. Fläche der Module in Einzelkonfiguration oder Feldkonfiguration, hohen Anlagenleistungen erzielen zu können. Mit der Skalierung der Anlagen von einer einfachen Dachanwendung hin zu Kraftwerksanwendungen sind daher vor allem die angreifende Kräfte und Momente und weiteren Einflüsse durch in der Strömung mitbewegte Teile wie beispielsweise und durch die Umweltbedingungen generell zum Auslegungsgegenstand geworden.

Als weiterer Stand der Technik wird insbesondere hingewiesen auf DE 102010014016 A1, DE 10351675 A1, WO 2010/109508, EP 2366965, EP 2520875.

Die Merkmale des Oberbegriffs des Anspruchs 1 der vorliegenden Anmeldung sind bekannt aus WO 2010/109508.

Heutige konzentrierende Technologien zur Bündelung solarer Einstrahlung erfordern eine hohe Genauigkeit der Nachführung entsprechender Systeme nach dem Sonnenstand, welche je nach verwendeter Kraftwerkstechnologie als ein- oder zweiaxiale Nachführungssysteme ausgeführt sein können. Je nach Ausführung der solaren Module können diese einzeln oder parallel in Reihe durch einen oder mehrere Antriebe verfahren werden. Die Auswahl der Antriebskomponenten richtet sich entsprechend nach dem Typus der Anlage bzw. des Systems und den einwirkenden Umwelteinflüssen und den sich daraus ergebenden Bemessungsgrundlagen.

Aufbauend auf den erprobten Konstruktionen in Kraftwerksumfang, von denen die ersten während der ersten und zweiten Ölkrise d.h. in den 1970iger Jahren gebaut und erprobt worden sind, haben sich grundsätzliche Tendenzen sowohl im Bereich der thermischen Anwendungen d.h. bei den typischerweise als Parabolrinnen, Heliostaten, Dish und Fresnelsystemen, um die wichtigsten konstruktiven Umsetzungen zu Anfang des 20. Jahrhunderts zu nennen, und bei den photovoltaischen Anwendungen d.h. bei einfache Flachpaneele als auch konzentrierende Systeme heraus kristallisiert.

Als Beispiel für einen konventionellen solaren Kollektor sei hier die Parabolrinne in Anmeldung US 2011/0048405 vom 26.02.2010 d.h. die dargestellte Konstruktion des Kollektors mit Torsionsrohr aus Stahl, Tragarmen aus Stahl und Glasspiegeln dargestellt. Die genutzten parabolischen Glasspiegel werden durch entsprechende Tragstruktur gehalten und dem Sonnenstand nachgeführt. In der Brennlinie der parabolischen Spiegel befindet sich der Receiver. Alle Kräfte und auftretenden Torsionsmomente werden durch die Spiegel auf die Tragarme und von dort auf das Torsionsrohr übertragen und in einen geeigneten Antrieb abgeleitet.

Eine eher unkonventionelle, wenn auch vor dem Hintergrund einer mechanischen und werkstoffspezifischen Auslegung optimierte Konstruktion, Ausführung eines solarthermischen Kollektors findet sich in der Anmeldung DE 10 2009 038 962 vom 20.08.2009. Hier wird ein röhrenförmiger Grundkörper mit einer transparenten oberen Schale und unteren Schale, welche als Spiegel ausgeführt wird, verwendet. Die angreifenden Kräfte werden durch den Röhrenkörper aufgenommen und in die Tragstruktur abgeleitet, welche wiederum mit einem Antrieb zur Kraftübertragung ausgestattet ist. Grundsätzlich können in den betriebsrelevanten Positionen durch die Ausführung des Kollektors als geschlossenes Röhrenelement und der Möglichkeit, bauartbedingt höhere Kräfte und Torsionsmomente übernehmen zu können, im Vergleich zu den konventionellen Systemen höhere Wirkungsgrade erwartet werden. Diese werden allerdings durch die transparente Abdeckung d.h. der vorderen Kollektorabdeckung teils oder ggf. komplett überkompensiert werden.

Die durch solare Kraftwerke zu erzielenden Wirkungsgrade steigen grundsätzlich mit der Genauigkeit der Nachführung bzw. der Minimierung möglicher Winkelablagen der solaren Module vom Sonnenstand. Verluste treten insbesondere durch systematische Winkelablage und/ oder zusätzliche dynamische Auslenkung auf. Dabei spielen die auftretenden Umwelteinflüsse - hierbei insbesondere die vorherrschende Windbelastung - eine wesentliche Rolle für Auslenkungen von der idealen Positionierung zur Sonne. Die auftretenden Auslenkungen lassen sich dabei grundsätzlich in Klassen, von denen hier die Wichtigsten genannt werden sollen, unterteilen:
(a) die Eigenverformung der absorbierenden und/oder reflektierenden Module durch Eigengewicht im gesamten Operationswinkelbereich (vereinbarungsgemäß wird die Sonnenaufgangsposition als alpha= 0° definiert) der möglichen Nachführung, d.h. von derzeit alpha= -30° (Schutzposition im Osten) bis alpha= 180° (Sonnenuntergangsposition) oder teilweise sogar alpha= 210° (Sicherungsposition im Westen). Grundsätzlich kommt allerdings der komplette Dreh- oder Nachführungswinkelbereich für Azimut und Elevation in den jeweiligen Bereichen von 0° bis 360° in Betracht. Für den Fall der nicht nachgeführten Systeme werden hierfür ggf. auch die Bemessungslasten einer statischen Position herangezogen. Zur Ermittlung der Bemessungslasten können die wirkenden Eigenlasten als quasi statisch mit bekanntem Kraftvektor (vertikal) angenommen werden.
(b) die Verformung jedes individuellen Kollektormoduls durch umweltbedingte zusätzlich zu dem unter (a) dargestellten Eigenwicht; im Wesentlichen durch Windlasten aber auch Schneelasten aufgeprägte Verformungen bzw. Verdrillung entsprechender Anordnungen der Kollektormodule. Diese Lasten und die sich daraus ergebenden Verformungen können instationär (zeitlich und örtlich variierend) auftreten.
(c) zusätzlich auftretende Effekte der Verformung in den o.g. Klassen durch auftretende Temperaturdifferenzen im Tages- und Jahresgang; bei den derzeit in Betrieb befindlichen Systemen sind diese im Vergleich zu den durch Windeinfluss und Eigengewicht aufgeprägten Verformungen allerdings zu vernachlässigen.

Je nach auftretenden Windgeschwindigkeiten stellen die nach den o.g. Eigenverformungsklassen einzeln, oder in Kombination, bei unter Windeinfluss auftretenden, maximalen Auslenkungen der absorbierenden oder reflektierenden Kollektormodulflächen in jeweiliger Winkelstellung (Nachführung zum Sonnenstand) im Operationsbereich den Auslegungs- bzw. Dimensionierungsfall des einzelnen Kollektormoduls, bzw. somit ebenfalls einer daraus zusammen gesetzten Modulgruppe, dar. Bei der Bemessung der Design- und Auslegungsrichtlinien der absorbierenden und/oder reflektierenden Kollektormodule wird für den Fall zu erwartender, starker kumulierter Auslenkungen zusammengesetzter Modulgruppen, ggf. auch dieser Verformungsfall, d.h. die kumulierte Verformung (meist Kombination aus Verformung und Verdrillung), als Dimensionierungs- bzw. Bemessungsgrundlage herangezogen. Im anvisierten Operationswinkelbereich und unter Zugrundelegung der maximal zulässigen Windgeschwindigkeiten des regulären Betriebs sollten unter Beachtung entsprechender Auslegungskriterien theoretisch gleichbleibende, maximale Anlagenwirkungsgrade zu erzielen sein.

Weiteres, sicherheitsrelevantes Auslegungskriterium für die solaren Energieanlagen d.h. die einzelnen absorbierenden und/oder reflektierenden Kollektormodule als auch den hieraus zusammengestellten Modulgruppen stellt die langjährige Schadensfreiheit der Anlagen auch unter ungünstigsten.

Umwelteinflüssen d.h. z.B. bei Windgeschwindigkeiten, die deutlich über den Betriebswindgeschwindigkeiten liegen, dar. Die solaren Anlagen werden, um diesen Umweltbedingungen widerstehen zu können, meist in eine sog. Sicherungspositionen gefahren, welche sich bezogen auf den Betriebsfall durch -relativ gesehen- niedrigere, auftretende Lasten und korrespondierenden Drehmomente im Vergleich zu den Betriebskonfigurationen auszeichnen. Die in dieser Position auftretenden Verformungen und zugehörige Lasten / Momente können dabei aufgrund der maximal möglichen Windgeschwindigkeiten wesentlich größer / höher sein als dies für den Anlagenbetrieb, welcher bei höchsten Wirkungsgraden stattfinden soll, zulässig ist. Bleibende d.h. plastische Verformungen sollten dennoch vermieden werden.

Vergleicht man die Anforderungen der Auslegung der solaren Energieanlagen vor dem Hintergrund der Minimierung möglicher Verformungen und deren direkten Einfluss auf den Wirkungsgrad der Anlagen während des Betriebs und parallel dazu die Anforderungen an die Anlagen in der Sicherungsposition, stellt man fest, dass sich diese bauartbedingt fast ausschließlich aus den Bedingungen und Verfahren zur Verformungsreduzierung während des regulären Betriebs ergeben. Entsprechend dimensionierte und ausgelegte Anlagen halten ebenfalls den in der sog. Sicherungspositionen auftretenden maximal auftretenden Lasten und Momenten stand. Dies allerdings bei erhöhter elastischer Verformung und/ oder erhöhtem Materialeinsatz zur Versteifung der Anlagen.

Der optimierte und an diversifizierte Einzelparameter angepasste Betrieb gesamter Kraftwerksfelder, welcher sich in einem optimierten Gesamtwirkungsgrad widerspiegelt, wird zukünftig die Höhe der sog. Stromgestehungskosten (Kosten der Erzeugung elektrischer Energie) festlegen und somit über Erfolg und Einsatz entsprechender Technologien entscheiden. Dies gilt ebenfalls für mögliche Optimierungen des Gesamtfeldbetriebes und somit des Gesamtwirkungsgrades; diese Arbeiten unterscheiden sich auch aufgrund der diversifizierten Einflussparameter grundsätzlich von den (Wirkungsgrad-) Optimierungen der einzelnen Kollektormoduleinheiten bzw. deren Komponenten. Eine wesentliche Rolle dabei spielen ebenfalls die auf das Gesamtkraftwerk wirkenden Umwelteinflüsse, und hierbei die auftretende Betriebswindgeschwindigkeit sowie die sich daraus ergebenden Belastungen und Momente der Einzelkollektoren, welche im bereits beschriebenen ersten Optimierungsschritt minimal sein sollten, und die auftretenden Belastungen der zusammengesetzten Kollektormoduleinheiten, welche im Operationsbereich aus den kumulierten Einzelbelastungen und zusätzlichen Interferenzbelastungen (Wechselwirkung der Anströmungsbedingungen mit weiteren Anlagenteilen) bestehen. Die auftretenden Interferenzbelastungen können dabei, je nach herrschenden Betriebsbedingungen, im Operationsbereich ein Vielfaches der kumulierten Belastung der Kollektormoduleinheiten des Gesamtkraftwerksystems sein. Eine detaillierte theoretische und experimentelle Beachtung/Berücksichtigung der auftretenden Interferenzen und deren Auswirkung auf den Wirkungsgrad des Gesamtkraftwerkes, bzw. eine entsprechend induzierte Verformung der einzelnen Kollektormodule und zusammengesetzter Moduleinheiten, wird so zur Auslegung und Dimensionierung zukünftig unerlässlich sein.

Die unter den o.g. Gesichtspunkten ausgelegten und für den Betrieb optimierten solarer Kraftwerke bzw. optimierten reflektierenden und/oder absorbierende Solarkollektoren sowie daraus zusammen gesetzte Modulgruppen werden theoretisch höchste Wirkungsgrade bei der Wandlung der solaren Einstrahlung in elektrische oder in thermische Energie sicherstellen.

Im regulären Kraftwerksbetrieb müssen neben den dafür notwendigen, minimalen Abweichungen / Verformungen von der optimalen Geometrie und/oder optimalen Ausrichtung der der einzelner Module oder/und zusammengesetzter Modulgruppen zum Sonnenstand, um maximale Gesamtanlagenwirkungsgrade sicherzustellen, viele weitere, diversifizierte Einzelparameter des Gesamtkraftwerks angepasst und optimiert werden. Den Wandlungsprozess (Kreisprozess zur Wandlung thermischer in elektrische Energie) betreffend, sind diese aus dem konventionellen Kraftwerksbetrieb bekannt und können unter Einhaltung von Analogien / Theorien zur Ähnlichkeit direkt auf solare Energieanlagen übertragen werden.

Eine einfache Optimierung unter Beachtung aller sich aus der Anordnung und Konfiguration zusammengesetzter, solarer Modulgruppen, den zugehörigen Verfahreinheiten / Trackingeinheiten und aller im solaren Feld vorgenommenen Einbauten ergebenden Parameter wird nicht möglich sein. Hier ergibt sich auf lange Sicht der Bedarf, dies für jede individuelle Konfiguration unter Beachtung der jeweils individuell einfließenden, bauartbedingten Parameter zu erarbeiten. Hierunter ist vor allem die individuelle Auslegung der einzelnen solaren Kollektoren und daraus zusammengesetzter Kollektormodulgruppen gegen Wind zu verstehen.

Die Optimierung und Anpassung aller Einzelschritte des regulären Betriebes werden zusammen einen optimierten Gesamtwirkungsgrad sicherstellen und für minimale sog. Stromgestehungskosten (Kosten der Erzeugung elektrischer Energie) sorgen, die zukünftig über Erfolg und Einsatz entsprechender Technologien entscheiden.

Betrachtet man moderne solare Kraftwerkssysteme, d.h. die zur Auslegung und Bemessung dieser Systeme bzw. der einzelner Kollektormodule und den daraus zusammengesetzten Moduleinheiten, herangezogenen Grundlagen, so stellt man zwangsläufig fest, dass bisher entsprechende Aufbauten als Bauwerke und somit als statische Aufbauten angesehen werden. Betrachtet man jedoch deren Betrieb näher, ist erkennbar, dass bei der Sonnenstandsnachführung der einzelner Kollektormodule, und den daraus zusammengesetzten Moduleinheiten, die jeweils sensitive Fläche zu Wandlung der solaren Einstrahlung in thermische oder direkt in elektrische Energie bewegt/verfahren wird. Dies geschieht mindestens ein-axial und dabei mindestens um 180° bei hochgenauer Nachführungsgenauigkeit.

Bauartbedingt bestehen moderne, solare Kraftwerksysteme in Bezug auf Umwelteinflüsse auslegungsrelevanten Komponenten bis zu 98% aus solaren absorbierenden und/oder reflektierenden Modulen, d.h. sensitiver Fläche zur Wandlung der solaren Einstrahlung in thermische oder direkt in elektrische Energie, die im Kraftwerkebetrieb bewegt/verfahren werden können/kann. Die bisherige Auslegung dieser Systeme unter Zugrundelegung der Grundlagen statischer Bauwerke scheint daher weder angepasst noch optimal; durch das Verfahren / Tracking der solaren Energieanlagen und die damit verbundenen Änderungen der Anlagengeometrie variieren die anzulegenden Bemessungsgrundlagen in einem enormen Wertebereich. Hinzu kommen, sofern man anstatt der theoretischen Auslegung den realen Anlagenbetrieb betrachtet, die auf das Gesamtkraftwerk wirkenden Umwelteinflüsse, und hierbei die auftretende Betriebswindgeschwindigkeit sowie die sich daraus ergebenden Belastungen und Momente der Einzelmodule und viel wichtiger der daraus zusammengesetzten Moduleinheiten, welche durch die optimierte Auslegung -zumindest theoretischminimal sein sollten. Im Gegensatz zu der theoretischen Herangehensweise der statischen Betrachtung der Kräfte und Momente an den isolierten Modulen und zusammengesetzten Kollektormoduleinheiten treten im regulären Anlagenbetrieb neben den kumulierten Einzelbelastungen zusätzliche Interferenzbelastungen (Wechselwirkung der Anströmungsbedingungen mit weiteren Anlagenteilen) auf. Die auftretenden statischen und bauartabhängig auch dynamischen Interferenzbelastungen können dabei, je nach vorherrschenden Betriebsbedingungen und zugehörigen Umweltparametern im Operationsbereich ein Vielfaches der theoretisch angenommenen, kumulierten Belastung der Kollektormoduleinheiten des Gesamtkraftwerksystems sein.

Eine detaillierte theoretische und experimentelle Beachtung / Berücksichtigung aller auftretender Interferenzen und deren Auswirkung auf den Wirkungsgrad des Gesamtkraftwerkes, bzw. die daraus induzierte Verformung der einzelnen solaren Module und zusammengesetzter Moduleinheiten, wird so zur Auslegung und Dimensionierung zukünftig unerlässlich sein. Speziell durch diesen Optimierungsschritt lassen sich langfristig optimierte Wirkungsgrade durch minimale Verformung der eingesetzten Komponenten der Module und dieser selbst erzielen. Dies ist die Grundlage zum Entwurf und der Erarbeitung der nachfolgend beschriebenen erfindungsgemäßen Vorrichtung gewesen.

Die grundsätzliche Möglichkeit der Beeinflussung der Umströmung eines photovoltaischen Moduls, welches mittels Befestigung auf einem Flachdach montiert ist, ist in Patent DE 10 2006 050 456 ausgeführt. Hier wird beschrieben, dass sich die Umströmung entsprechend montierter, photovoltaischer Module mittels passiver Ventilation durch einen Spalt verändern lässt.

Bei technisch vergleichbaren Maschinen/ Anlagen, die bei gleichbleibender Geometrie in unterschiedlichen Operationsbereichen unter veränderlichen Orientierungswinkeln betrieben werden können - an dieser Stelle sei als einfaches Beispiel ein Flugzeug genannt - und zur Auslegung dieser Bauteilen/Aufbauten zugrunde gelegten Grundlagen/Richtlinien, stellt man zwangsläufig fest, dass eine individuelle Anpassung/Auslegung an/für jeden einzelnen Betriebspunkt der Maschine stattfindet.

Wieder auf das Flugzeug bezogen heißt dies, dass die ausgelegte Systemkonfiguration -bei Anpassung entsprechend möglicher Systemparameter wie beispielsweise der Veränderung des Anstellwinkels und/oder dem Ausfahren zusätzlicher Klappenelemente- bei maximalem Gewicht starten, die Flugaufgabe energieeffizient erfüllen und unter reduzierter Last landen können muss - für mindestens fünfundzwanzig Betriebsjahre, meist allerdings für wesentlich längere Zeiträume.

Diese Auslegung/Optimierung dieser Systeme im Betriebsbereich wird in den seltensten Fällen unter statischen sondern meist dynamischen Gesichtspunkten durchgeführt.

Der Erfindung liegt daher die Aufgabe zugrunde, in Abhängigkeit der herrschenden, wechselnden Betriebsbedingungen und lokalen Umwelteinflüsse -insbesondere bei auftretenden, starken auch dynamischen Belastungen durch Wind - der Kraftwerksysteme, d.h. einzelner Kollektormodule und den daraus zusammengesetzten Moduleinheiten, einen maximalen Wirkungsgrad und durch konstante Anlagenbetriebsbedingungen insgesamt einen korrelierenden maximalen Gesamtwirkungsgrad für jede individuelle Betriebssituation/-belastung sicherzustellen. Auf die einzelnen Kollektormodule und den daraus zusammengesetzten Moduleinheiten übertragen bedeutet dies, dass minimale Eigenverformungen der o.g. Klassen im Operationsbereich unter den möglichen auftretenden Betriebsbedingungen sichergestellt werden müssen. Alternativ können aber auch davon abweichende Ziele im Fokus der Optimierung stehen; als Beispiel sei hier die Unterdrückung, Vermeidung und/oder die gezielt Gegenerzeugung von dynamischen Effekten stehen.

Die Aufgabe wird mit einer Anordnung aus einem solaren Kollektormodul bestehend aus reflektierenden oder absorbierenden Modulen und einer Vorrichtung zum Schutz des solaren Kollektormoduls gegen Wind und mit dem Wind bewegte Partikel und Gegenstände gemäß der Merkmale nach Anspruch 1 gelöst. Vorteilhafte Weiterbildungen sind in den Unteransprüchen beschrieben.

Je nach betriebsoptimaler Anforderung generiert die Vorrichtung der erfindungsgemäßen Anordnung durch Aktions- oder Reaktionskräfte z.B. durch die Modifikation der Umströmung der solaren Module (5) oder des gesamten Kollektors (6) geringstmögliche Struktur- und/oder

Momentenbelastungen für die einzelnen solaren Module als auch die zusammengesetzten Modelgruppen, welche Auslöser für die Eigenverformungen der o.g. Klassen im Operationsbereich sind und somit erhebliche Wirkungsgradminimierung zur Folge haben können.

Darüber hinaus können die Vorrichtungen in entsprechenden Ausführungsformen durch stabilisierende Maßnahmen beispielsweise der Reduzierung oder ggf. kompletten Unterdrückung von auftretenden statischen und/ oder dynamischen Belastungen oder Beeinflussungen dienen. Durch die Verwendung einer oder mehrerer zusätzlicher Vorrichtungen zur Aufnahme oder Befestigung fester, flüssiger oder gasförmiger Stoffe (5) lassen sich sowohl für den Betriebsfall als auch für die Sicherungsposition zusätzlich notwendige Strukturlasten und Momente zur Optimierung des Gesamtsystems einbringen.

Die Vorrichtung kann gemäß der zu erwartenden Belastung als aktiver oder passiver Manipulator in einfacher und/ oder auf den Anwendungsfall angepasster Geometrie ausgeführt sein und kann auf den Anwendungsfall bezogen, d.h. einzelne Kollektormodule und/oder den daraus zusammengesetzten Moduleinheiten, gleichförmig in fest montierter Bauweise oder in gleichförmig oder ungleichförmig korrelierter Weise zur Betriebsbewegung mitbewegt oder auch isoliert verfahren/gesteuert werden.

Im regulären Anlagenbetrieb sichert die starre und/oder bewegliche Vorrichtung in Einheit mit den einzelnen Kollektormodulen und/ oder den daraus zusammengesetzten Moduleinheiten den optimalen Wirkungsgrad des Gesamtaufbaus der konzentrierenden, absorbierenden oder reflektierenden Module in Einzelkonfiguration - meist allerdings in Feldkonfiguration durch bauartoptimale Integration im Verbund. Bei zunehmendem Einfluss der umweltrelevanten Parameter in Abhängigkeit des Betriebspunktes, welche im Ergebnis als leistungsmindernd wahrgenommen werden können, können sowohl die mit bewegten starren Vorrichtungen, deren positiver Einfluss auf den Wirkungsgrad in vorherigem Optimierungsprozess sichergestellt werden muss, als auch die beweglichen Vorrichtungen, durch geeignetes Verfahren in die den variierenden Umweltparametern optimal angepassten Weise zur Wiederherstellung des optimalen Wirkungsgrades einzelner Kollektormodulen und/oder den daraus zusammengesetzten Moduleinheiten genutzt werden.

Beispielhaft heißt dies für den Anwendungsfall, dass bei aufkommenden hohen Windgeschwindigkeit z.B. in einem Parabolrinnenkollektorfeld, welches aus Reihen zusammengesetzter Einzelkollektoren besteht die jeweils durch eine oder mehrere Verfahreinheiten bewegt werden, durch die Summation der jeweiligen, induzierten Einzeldrehmomente der Module unter Berücksichtigung der werkstoffspezifischen Kennwert eine Verdrillung auftritt. Einzel für jedes Modul und für die zusammengesetzte Modulgruppe.

Entsprechende Verdrillungswerte werden für die Module, welche sich in direktem mechanischem Anschluss eines Festlagers oder Antriebes/ einer Verfahreinheit befinden, minimal sein. Diese ergibt sich aus der Verdrillung des einzelnen d.h. ersten Moduls am Festlager selbst. Mit zunehmender Modulzahl und dem damit zusätzlich induziertem Drehmoment werden die Verdrillungswinkel bei gleichartigen Kollektormodulen (und ggf. zusätzlich integrierten Anbauteilen) überproportional größer. Je nach auftretender statischer Windbelastung werden absolute Verdrillungswerte für die zusammengesetzten Moduleinheiten erreicht, die den individuellen Kollektorwirkungsgrad stark reduzieren oder gar zu Null werden lassen. Starre und/oder bewegliche Vorrichtung der o.g. Art würden für diesen Fall aktiv mitbewegt oder als passiver Manipulator entsprechende Widerstandskräfte und -momente (Erzeugung von Kräften und Momenten, die den ursächlichen Komponenten entgegengerichtet sind) erzeugen. Als Ergebnis ließen sich reduzierte Verdrillungen oder je nach Aufwand der Steuerung und Regelung der Vorrichtungen sogar keine Verdrillung und somit ein optimierter Wirkungsgrad des Gesamtsystems zusammengesetzte Moduleinheiten erreichen.

Der genannte Effekt durch den Einsatz bzw. die Integration der erfindungsgemäßen Vorrichtungen an einzelner Kollektormodulen und/oder den daraus zusammengesetzten Moduleinheiten lässt sich im Umkehrschluss natürlich auch durch die gleichförmig homogene und/oder ungleichförmige, homogene oder inhomogene Reduktion von Komponenten d.h. der erfindungsgemäßen Vorrichtungen und/oder Komponenten an den Moduleinheiten / zusammengesetzte Modulgruppen bewirken. So können für den Fall der übermäßigen Belastung durch Verdrillung z.B. aktiv oder passiv gesteuert die erfindungsgemäßen Vorrichtungen so verfahren werden, dass sie geringstmögliche Widerstände erzeugen.

Insbesondere die beweglichen Vorrichtungen können darüber hinaus, in Abhängigkeit auftretender Umweltparameter und hier insbesondere beim Übersteigen eines festgelegten oder variablen Sehwellwertes, z.B. des Windanströmungsvektors, dazu genutzt werden, als passives Steuerungselement z.B. das Verfahren der konzentrierenden, absorbierenden oder reflektierenden Module in Einzelkonfiguration oder in Feldkonfiguration in eine vorher bestimmte Position, meist zur Sicherung des Gesamtaufbaus, genutzt zu werden. Im Vergleich zu den bisher in Betrieb befindlichen Systemen, welche ihre Antriebssysteme leistungsmäßig an den in bestimmten Betriebszuständen maximal auftretenden Kräfte unveränderlicher Geometrien auslegen, kann so unter Nutzung des auftretenden Windanströmungsvektors, in Kombination mit den im Operationsbereich gleichförmig oder ungleichförmig beweglichen Vorrichtungen, und den so dynamisch erzeugten Kräften und Momenten, auf einen Antrieb generell verzichtet werden; es wird lediglich eine Bremse zur Arretierung eines einzelnen Kollektormoduls bzw. daraus zusammengesetzter Modulgruppen in einer vorher bestimmten Position benötigt.

Für den beispielhaften Anwendungsfall heißt dies, dass bei aufkommenden hohen Windgeschwindigkeit z.B. in einem Parabolrinnenkollektorfeld, welches aus Reihen zusammengesetzter Einzelkollektoren besteht die jeweils durch eine oder mehrere Verfahreinheiten bewegt werden, durch das aktive Verfahren eines Manipulators Drehmomente, welche die durch den Antrieb erzeugten Momente unterstützen, erzeugt werden können, so dass entsprechende Moduleinheiten / zusammengesetzte Modulgruppe teilweise ohne oder ganz ohne zusätzlichen Antrieb in ihre Sicherungsposition (Endanschlag) gefahren werden kann.

Bauartbedingt können solare Kraftwerkssysteme je nach geometrischem Aufbau d.h. unter Verwendung spezieller, reflektierender und/oder absorbierender Module und deren Befestigungs- und Halterungssysteme nicht nur durch statische Kräfte und damit einhergehende Verformungen beeinträchtigt sein, wie dies in den bisherigen Absätzen beschrieben wurde, sondern auch durch instationäre Kräfte und/ oder instationäre Schwingungsanregung beinträchtig sein. Angeregt werden diese Aufbauten im Wesentlichen durch Wechselwirkung der Geometrie mit den Umwelteinflüssen. Beispielhaft sei hier die instationäre Ablöseneigung an unterschiedlichen geometrischen Körpern, im einfachsten Fall einer Platte oder z.B. eines Kreiszylinders genannt. Wirkungsgradverluste treten dabei vor allem durch die Schwingungsanregung durch dynamische Kräfte und die damit einhergehende dynamische Verformung der Module und/oder zusammengesetzten Modulgruppen auf.

Die Vorrichtung der erfindungsgemäßen Anordnung, in starrer oder flexibler Weise, passiv mitbewegt oder aktiv angesteuert, kann die auftretenden dynamischen Effekte in Analogie zur bereits für den statischen Fall dargestellten Funktionsweise stark unterdrücken oder ggf. vollständig verhindern. Durchgeführte Versuche für solarthermische als auch photovoltaische Anwendungen zeigen reduzierte Wechsellasten von über 75%.

Durch zusätzlich bewegte (passiv oder aktiv) erfindungsgemäße Vorrichtungen lassen sich die durch die Umströmung des Gesamtaufbaus entstehenden dynamischen Struktur- und Momentenlasten für den Betriebsbereich und in der Sicherungsposition vollständig unterdrücken. Die Vorrichtungen stabilisieren das Gesamtsystem bzw. den Nachlauf des Gesamtsystems und sorgen somit dafür, dass die ablösende Strömung möglichst keine dynamischen Effekte auf die benachbarten oder im Nachlauf befindlichen Systeme ausüben kann.

Die eine oder mehrere starre und/oder bewegliche Vorrichtungen, welche fest und/oder lose mit dem Aufbau verbunden und/ oder in der Nähe des Aufbaus positioniert sein können, können in ihrer Geometrie und Höhe variabel aufgehängt sein. Durch zusätzliche Vorrichtungen kann die Höhe der Aufhängung variabel an den Lastfall/Betriebsfall und/oder Betriebsbereich angepasst bzw. variiert werden.

Eine spezielle Ausführung bzw. spezieller Anlagenbetrieb der einzelnen Kollektormodulen und/oder den daraus zusammengesetzten Moduleinheiten zur Erzielung des optimalen Wirkungsgrads des Gesamtaufbaus der konzentrierenden, absorbierenden oder reflektierenden Module in Einzelkonfiguration - meist allerdings in Feldkonfiguration durch bauartoptimale Integration im Verbund - ist durch die symmetrische oder unsymmetrische Ausführung der einzelnen Kollektormodulen und/oder den daraus zusammengesetzten Moduleinheiten gegeben, bei denen die starre und/oder bewegliche Vorrichtung und/oder darüber hinaus Komponenten der einzelnen Kollektormodulen und/oder den daraus zusammengesetzten Moduleinheiten dauerhaft oder durch aktive und/oder passive Steuerung teilweise oder ganz entfernt werden kann.

Aus der bisherigen funktionalen Beschreibung des Einsatzes der Vorrichtung mit zugehörigen exemplarischen Ausführungsbeispielen wird deutlich, dass im durch die Vorrichtung und zusätzliche Hilfsvorrichtungen ein nahezu vollständiger Schutz der solaren Module in Kraftwerksanlagen erreicht werden kann. Neben erhöhter Systemsicherheit ergibt sich dadurch vor allem auch die Möglichkeit des einfacheren Systemaufbaus und des stark optimierten Anlagenbetriebs.

Um diese Vorteile vollumfänglich nutzen zu können, ist es notwendig, bereits während der konzeptionellen Planungsphase des solaren Kraftwerks das mögliche Optimierungspotential abzuschätzen und dies direkt in die Konstruktion und den späteren Aufbau mit einzubringen. Untersuchungen zur Abschätzung der Wirkung des Einsatzes der erfindungsgemäßen Vorrichtung am späteren einzelnen Modul und/oder zusammengesetzter Modulgruppen können bereits in der Planungsphase des solaren Kraftwerkes im Modellmaßstab durchgeführt werden. Ähnlich wie in der Entwicklung von Luftfahrzeugen können so qualitative als auch quantitativ Bemessungs- und Auslegungsgrundlagen erarbeitet werden. Entsprechende Ergebnisse werden neben Erkenntnissen zur phänomenologischen Wirkung der Vorrichtung vor allem auch Aufschluss über das mögliche quantitative Optimierungspotential der einzelnen Module und zusammengesetzter Modulgruppen gegenüber nicht optimierten Anlegen ergeben.

In der technischen Ausführung kann die Vorrichtung direkt und/oder unterstützt durch mögliche Hilfsvorrichtungen unmittelbar oder mittelbar fest und/oder flexibel mit dem Modul verbunden werden. Hierbei lässt sich die Vorrichtung oder ggf. auch mehrere Vorrichtungen auch in Kombination mit zusätzlichen Hilfsvorrichtungen in beliebiger Orientierungsrichtung bzw. unterschiedlichen Achsen montieren. Diese können, müssen aber nicht zwangsweise mit der Bewegungsachse oder den Bewegungsachsen der solaren Module oder der zusammengesetzten Modulgruppen übereinstimmen.

Im Einsatz kann die Vorrichtung, welche als eine wesentliche Funktion die Beeinflussung der Strömung um das solare Modul und zusammengesetzter Modulgruppen hat, als starre Ausführung vorgesehen werden, die starr am solaren Modul befestigt ist und sich analog zur Bewegung des solaren Moduls mitbewegt. Im Betrieb der solaren Module werden durch die Veränderung des Anlagenwinkels in einer oder mehrerer Drehachsen aufgrund der Änderung des Sonnenstandswinkels und entsprechender Nachführung durch den umweltspezifischen Einfluss und dessen Änderung je nach Winkelposition unterschiedliche Aktionskräfte auf das solare Modul ausgeübt. Der Einsatz der erfindungsgemäßen Vorrichtung als aktive Vorrichtung ist daher als Variante sehr sinnvoll.

Die Vorrichtung kann grundsätzlich in Bezug auf die Grundachsen des Systems symmetrisch oder unsymmetrisch aufgebaut sein. Messungen an Prototypen haben gezeigt, dass gerade der unsymmetrische Aufbau dem symmetrischen gegenüber wesentliche Vorteile in Bezug auf die durch umweltspezifische Einflüsse induzierten Last- und Momenten und auch die entstehenden Reaktionskräfte und -momente hat. In Erweiterung der unsymmetrischen Ausführung können die Vorrichtung und/oder Varianten der Vorrichtung in ihrer Geometrie und Höhe variabel ausgeführt und/oder am solaren Modul oder eine Hilfsvorrichtung montiert sein. Durch zusätzliche Hilfsvorrichtungen kann die Höhe der Aufhängung variabel an den Lastfall angepasst bzw. variiert werden. Diese Ausführung kann vor allem die nicht gleichförmige Anströmung d.h. Unterschiede in der Anströmungsgeschwindigkeit in Abhängigkeit der Anströmungshöhe (Bodengrenzschichtbildung hat erheblichen Einfluss auf die Anströmungsbedingungen), die gleich der jeweiligen Höhe des solaren Moduls sein kann, kompensieren.

Für bestimmte Ausführungsbeispiele hat sich gezeigt, dass die Montage bzw. Integration der erfindungsgemäßen Vorrichtungen im Wirkungsbereich des solaren Kollektors an geeigneten Anflanschungspunkten und ggf. mittels zusätzlicher Hilfsvorrichtungen erscheint. Als Wirkungsbereich wird dabei grundsätzlich das Doppelte der maximalen Referenzlänge des solaren Kollektors als maximalem Abstand von diesem definiert. Für besondere Anwendungsfälle sind aber auch größere Abstände denkbar.

Die Verwendung von Leichtbaustrukturen und die dafür eingesetzten modernen Verbundmaterialien für den Aufbau der erfindungsgemäßen Vorrichtungen garantieren maximale Optimierungswirkung bei minimaler zusätzlicher Struktur- und Momentenlast durch den Aufbau selbst. Einfachste Systeme können darüber hinaus auch aus metallischen Wertstoffen oder Kunststoffen in individuellen Materialstärken als natürlich auch aus Kombinationen beider hergestellt werden.

Wetterfeste und UV-beständige Materialien garantieren darüber neben der möglichen mechanischen Stabilität auch lange Lebenszyklen und hohe Verfügbarkeit des Schutzes.

Die technische Ausführung der Vorrichtung lässt sich dabei wie bereits beschrieben individuell an den zu erwartenden Lastfall und die auf diesen bezogenen Reaktionslasten und -momente anpassen. Durch gestalterische Ausführungsdetails lässt sich die Vorrichtung darüber hinaus d.h. die Montage am solaren Modul und/ oder Hilfsvorrichtungen des solaren Moduls als zusätzliches Versteifungselement, mit der Möglichkeit der Anpassung der räumlichen Lage durch mögliche Verformung durch den Einfluss des umweltspezifischen Einflusses als auch aktive Stellkomponenten einsetzen.

Als Beispiel einer technischen Ausführung kann hier wiederum das Flugzeug herangezogen werden. Durch den Einsatz von miniaturisierten Hinterkantenklappen, welche für den Fall von Start und Landung d.h. in den Hochauftriebsphasen an den Hinterkanten der Klappen ausgefahren werden, kann die Verwindungssteifigkeit der hochbelasteten Klappen bei gleichzeitiger, starke Auftriebssteigerung stark vergrößert werden.

Die Vorrichtung der erfindungsgemäßen Anordnung lässt sich bei der Verwendung eines oder mehrerer zusätzlicher Hilfsvorrichtungen und ggf. einer oder mehrerer zusätzlicher Hilfsvorrichtungen zur Befestigung dieser, die einzeln oder als Gesamtstruktur am solaren Modul montiert werden können, gegen nahezu alle Umwelteinflüsse im Betrieb und darüber hinaus ebenfalls in möglichen Schutzpositionen schützen.

Hierbei soll exemplarisch die Möglichkeit der Kombination einer starren, vollflächigen erfindungsgemäßen Vorrichtung, wie sie in den vorangegangenen Abschnitten beschrieben wurde, in Kombination mit zusätzlichen Hilfsvorrichtungen betrachtet werden. Diese lassen sich einzeln und im Verbund als Schutz (Klappe oder Einwicklung) der Module nutzen, so dass diese außer gegen Wind z.B. auch gegen die im Wind mittransportierten Gegenstände / Medien, Hagel und sogar möglicherweise sogar gegen die solare Einstrahlung (UV Schutz) geschützt sind.

Die Vorrichtung der erfindungsgemäßen Anordnung kann einzeln oder in Kombination mit zusätzlichen Hilfsvorrichtungen segmentiert und in unterschiedlichen geometrischen Ausführungsformen ausgeführt sein. Durch Integration von Folien-, Sieb-, Netz- oder Zaunelemente, die zudem in horizontaler und vertikaler Achse segmentiert und/oder in inhomogener Ausführung gestaltet sein können, wird zudem die individuelle Einstellung der Wirkfläche der Vorrichtungen an den zu erwartenden Lastfall, d.h. die zu erwartende Windbelastung ermöglicht. Sowohl in Höhenrichtung als auch in Strömungsrichtung lassen sich mehrere Elemente miteinander kombinieren, um optimale Wirkung bei geringstmöglichem Strukturgewicht zu erzeugen.

Aus strömungstechnischer Sicht wirken sich gerade Inhomogenitäten und Nicht-Symmetrien im Aufbau der einzelnen solaren Module und/oder zusammengesetzter Modulgruppen und an diesen mittelbar oder unmittelbar montierten Vorrichtungen positiv auf die Optimierung des Wirkungsgrades und die Stabilisierung des Betriebs aus.

Als Ausführungsbeispiel sei hier die Möglichkeit der Integration der erfindungsgemäßen Vorrichtung als Sieb-, Netz- oder Zaunelement direkt an der Umrandung eines Heliostatenaufbaus genannt. Wird dieser in der Sicherungsposition d.h. in horizontaler Stellung nun durch Wind angeströmt kommt es unter bei konventioneller Ausführung zu dynamischer Anregung des Aufbaus, bedingt durch starke, dynamische Saugeffekte d.h. Auftrieb und/oder Abtrieb bei der Umströmung des Aufbaus. Die Sieb-, Netz- oder Zaunelemente verhindern dies, indem sie, je nach Ausführung die dynamischen Auftriebs- und/oder Abtriebseffekte teilweise oder ganz unterbinden.

Die Sieb-, Netz- oder Zaunelemente als integrierte Bestandteile der erfindungsgemäßen Vorrichtung können somit in besonderer Weise zur Stabilisierung der solaren Module beitragen.

Die Verwendung von Vorrichtungen selbst und/oder der Befestigungspunkte der Vorrichtungen an den horizontalen und vertikalen Rändern der Module bieten zusätzlichen Schutz und Funktionalität.

So lassen sich die Vorrichtungen gezielt zur Reduzierung oder kompletten Versperrung der Bodenfreiheit des Moduls in den unterschiedlichen Bewegungsachsen nutzen. Entsprechend der Geometrie und Ausführung der Vorrichtung kann diese dabei ebenfalls als mechanischer Anschlag, Puffer oder Dämpfer verwendet werden. Durch die asymmetrische Gestaltung der Vorrichtung kann diese darüber hinaus in Kombination d.h. bei Nutzung des eigenen Aktuators oder durch Nutzung des Antriebes des solaren Moduls selbst zur Herstellung/Wiederherstellung des Bodenabstandes z.B. bei Versandung oder Ablagerung granularer Medien bzw. zum Verschieben / Transport von Gegenständen im Wirkungsbereich des Moduls verwendet werden.

Neben der Sicherstellung des Schutzes der absorbierenden und/oder reflektierenden Module können die Vorrichtungen und auch Hilfsvorrichtungen zur Aufnahme und/oder Befestigung oder Aufnahme und Befestigung von festen, flüssigen oder gasförmigen Stoffen auch zur achsparallelen Führung von Diagnose-, Mess- und Regelsystemen als auch für die Reinigung der Flächen entsprechender Module genutzt werden. Darüber hinaus ist die Vorrichtung auch als Führung und/oder zur Positionierung von Systemen, die nicht dauerhaft im Wirkungsbereich des solaren Moduls befindlich sind, nutzbar.

Die Vorrichtung der erfindungsgemäßen Anordnung welche, wie vorab beschrieben, auch in Teilkörpern bzw. Teilflächen ausgeführt sein kann, lässt sich im einfachsten Fall als einfache, ebene Platte ausführen. Diese wird über einen oder mehrere Befestigungspunkte unmittelbar oder durch eine Hilfsvorrichtung mittelbar starr oder schwenkbar d.h. beweglich am solaren Modul befestigt.

Aus der Strömungsmechanik ist bekannt, dass in Abhängigkeit der Anströmungsbedingungen bzw. Umströmungsbedingungen bezogen auf die erfindungsgemäße Vorrichtung d.h. Lage und / oder Orientierung der Vorrichtung, im Beispiel also der ausgeführten einfachen, ebenen Platte, in Bezug auf den Anströmungsvektor die Umströmung nur in einem sehr eingeschränkten Bereich d.h. bei sehr geringen Winkelabweichungen der Plattenlängsausrichtung zur Anströmungsrichtung beidseitig an der Platte anliegen und somit maximale Stabilisierung der Umströmung und die damit verbundenen Reaktionskräfte einhergehen. Außerhalb dieses Winkelbereiches löst die Strömung beim Auftreffen auf die "scharfe" Kante der erfindungsgemäßen Vorrichtung ab und es entsteht ein Gebiet abgelöster Strömung anstatt der potentiellen beschleunigten Strömung, die üblicherweise auf der sog. Saugseite herrschen würde. Daraus folgt, dass, zur weiteren Ausweitung und Optimierung der Wirksamkeit der erfindungsgemäßen Vorrichtung, diese ergänzt und / oder in der Gesamtheit in unterschiedlichen geometrischen Formen ausgeführt sein kann. Beispielsweise sei hier als Form der Kreiszylinder genannt, welcher ein unkritisches Abreißen der Strömung in einem weiteren Variationsbereich des möglichen Anströmungsvektors der Strömung und erfindungsgemäßer Vorrichtung sicherstellen würde. Darüber hinaus lassen sich aber auch alle erdenklichen Standard- als auch spezielle Profilgeometrien nutzen, um im gesamten Operationswinkelbereich der solaren Moduls eine stabile Umströmung der erfindungsgemäßen Vorrichtung sicherzustellen und dabei ggf. zusätzlich maximale Reaktionsmomente hervorzurufen d.h. zum Beispiel durch den Einfluss von Wind sicherzustellen. Je nach Aufbau und den zu erzeugenden Reaktionskräften am solaren Modul kann die einfache, ebene Platte dabei auch segmentiert ausgeführt sein. Zusätzlich kann durch die Verwendung von Inhomogenitäten wie beispielsweise dem Einbringen von Lochungen und / oder der Integration von Zaun- oder Siebstrukturen das Verhältnis von Strömungsumlenkung zur Durchströmung der jeweiligen einfachen, ebene Platte variiert und an die jeweiligen Anforderungen angepasst werden.

Die Vorrichtung der erfindungsgemäßen Anordnung kann dabei, wie bereits vorab beschrieben auch ungleichförmige Streckung und / oder Form in Bezug auf die entsprechenden Raumrichtungen der Ausrichtung besitzen. Als praktisches Ausführungsbeispiel kann hier ein starres oder flexibles Klappenelement angenommen werden, welches auf der sog. Saugseite eines Parabolrinnenkollektors d.h. auf der Seite konvexer Krümmung montiert wird, um die Strömung in Abhängigkeit der Betriebsparameter gezielt zu stabilisieren und zu führen oder aber die Lage des Strömungsabrisses zu fixieren und dadurch eine Stabilisierung und Optimierung der Umströmung sicherzustellen. Hierbei können, wie beschrieben, einzelne Teile der Klappe aus inhomogenen Materialien ausgeführt sein. Die Verwendung unterschiedlicher Geometrien und deren Kombination ermöglicht die Einstellung einer individuellen Stabilisierung des solaren Moduls und somit eines maximalen Schutzes.

Ergänzt werden kann der Aufbau der erfindungsgemäßen Vorrichtung in einfacher oder spezieller geometrischer Ausführung durch zusätzliche Hilfsvorrichtungen, welche wiederum nicht in homogener sondern beispielsweise durch die Integration von Sieb- oder Zaumelementen mit zusätzlicher Möglichkeit der teilweisen Durchströmung ausgerüstet sein können. Dies optimiert und stabilisiert die Strömung zusätzlich. Zusätzlich besteht bei der Verwendung z.B. einfacher Schutznetze als Hilfsvorrichtungen, dass das solare Modul sich durch eigene Drehung im Operationsraum in diese Hilfsvorrichtungen eindreht und somit von äußeren Umwelteinflüssen nahezu vollkommen geschützt ist. Als praktisches Ausführungsbeispiel kann hier aber z.B. auch die Ausführung der erfindungsgemäßen Vorrichtung als Kreiszylinder zur Aufnahme oder Befestigung oder Aufnahme und Befestigung von festen, flüssigen oder gasförmigen Stoffen ausgeführt ist, genannt werden. Die erfindungsgemäße Vorrichtung kann so, gemäß Anforderung im Feld der solaren Module, mit zusätzlicher Masse ausgerüstet werden und durch die Verwendung zusätzlicher Hilfsvorrichtungen wie beispielsweise einen Windschutzsieb in unterschiedlichen Höhen an der horizontalen Tragstruktur eines Heliostaten aufgehängt werden. Die Umströmung des Heliostaten wird dadurch., je nach Elevationswinkel des solaren Moduls und der sich dabei einstellenden Bodenfreiheit, stark abgeändert und stabilisiert. Lasten und induzierte Drehmomente sinken deutlich.

Die im Rahmen der Beschreibung der erfindungsgemäßen Vorrichtung bzw. deren Wirkung d.h. der Stabilisierung und der damit einhergehenden Optimierung der Umströmung und des Schutzes der solaren Module dargestellte Verwendung bzw. Anwendung der Vorrichtung bezieht sich zum einen auf die solaren Module selbst, zum anderen auf den Operationsbereich der einzelnen solaren Module und letztendlich auch auf den Anwendungsbereich im Kraftwerksfeld der solaren Module.

Bei der Betrachtung einzelner solarer Kraftwerke und gesamter Kraftwerksfelder fällt auf, dass sich primär durch lokale Modifikationen z.B. durch den Einsatz der erfindungsgemäßen Vorrichtung einzelne solare Module stabilisieren und schützen lassen und diese somit einen optimierten Betrieb erfahren.

Insbesondere in den gefährdeten Bereichen entsprechender Kraftwerksfelder lassen sich damit deutliche Gewinne im Wirkungsgrad und ein generell optimierter Betrieb bezogen auf einzelne, solare Module erreichen.

Der Einsatz der Vorrichtung der erfindungsgemäßen Anordnung beschränkt sich dabei, bezogen auf das einzelne solare Modul, auf den Operationsbereich des solaren Moduls. Dies bedeutet zum einen, dass die erfindungsgemäße Vorrichtung direkt d.h. unmittelbar starr und / oder flexibel am solaren Modul befestigt werden kann. Es ist aber auch möglich, die erfindungsgemäße Vorrichtung direkt oder durch eine oder mehrere Hilfsvorrichtungen mittelbar am solaren Modul zu befestigen.

### Zeichnungen

Weitere Vorteile, Merkmale und Einzelheiten der Erfindung ergeben sich aus den Ansprüchen und Unteransprüchen, in welcher - unter Bezugnahme auf die Zeichnung - besonders bevorzugte Ausführungsbeispiele im Einzelnen beschrieben sind.

Dabei können die in der Zeichnung dargestellten sowie in den Ansprüchen und. der Beschreibung erwähnten Merkmale jeweils einzeln für sich oder in beliebiger Kombination erfindungswesentlich sein.

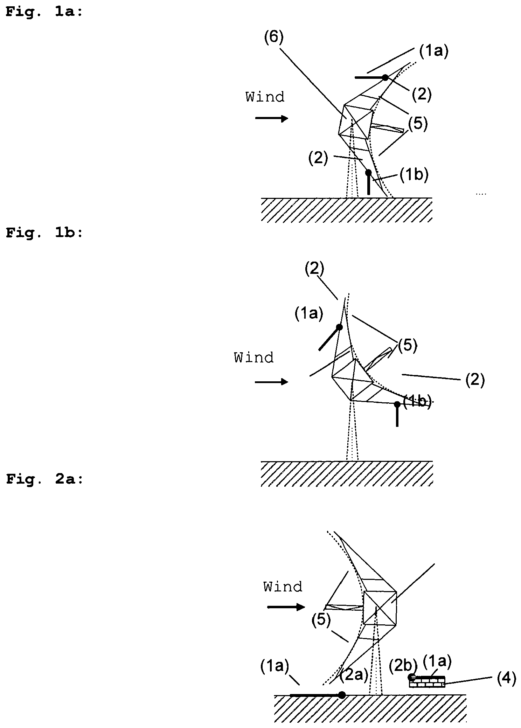

Fig. 1a zeigt in der Seitenansicht beispielhaft den Aufbau einer Kombination der erfindungsgemäßen Vorrichtung zur Optimierung einzelner solarer Kollektormodule und zusammengesetzter Kollektormodulgruppen gegen Umwelteinflüsse, insbesondere Wind an einem solarthermischen Kollektormodul (6) einem Befestigungspunkt (2) befestigter, starrer mitbewegter (1a) und beweglich gleichförmiger oder ungleichförmiger Weise mitbewegter (1) Montage. In der Schutzposition der einzelnen solaren Kollektormodule und zusammengesetzter Kollektormodulgruppen wirkt die erfindungsgemäße Vorrichtung (1b) als Schutz der bodennahen reflektierenden oder absorbierenden Module des Kollektors gegen in der Strömung mitgeführte Partikel und Gegenstände.

Vorrichtung (1a) sorgt für eine gleichbleibend optimierte Umströmung der Kollektoroberkante.

Fig. 1b zeigt den Aufbau in einer ausgewählten Betriebsposition. Hier sorgt Vorrichtung (1b) für eine Minimierung der Unterströmung und damit einhergehenden geringeren Strukturlasten sowie vor allem Drehmomenten des Kollektorsystems; parallel dazu erzeugt Vorrichtung (1a) durch zusätzliche Strömungsumlenkung ein Gegendrehmoment. Hierdurch werden optimierte Eigenverformungen des Gesamtsystems bei höchstmöglichem Wirkungsgrad garantiert.

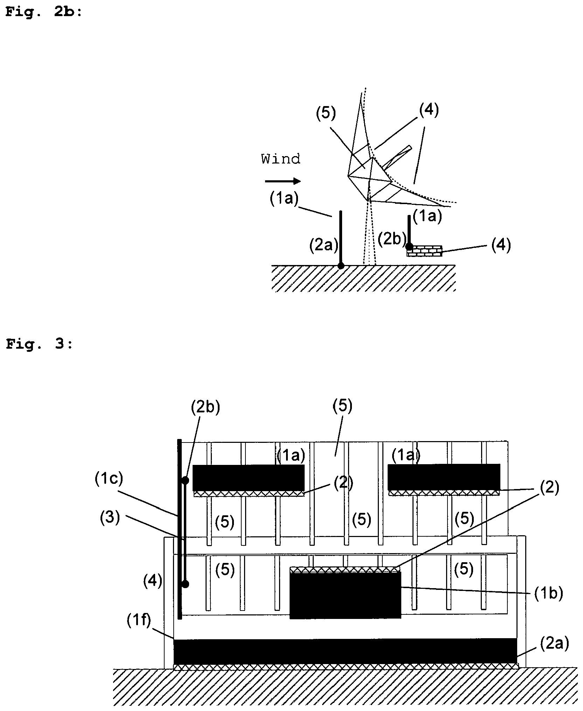

Die nicht zur Erfindung gehörige Ausführung gemäß Fig. 2a zeigt in der Seitenansicht beispielhaft den Aufbau einer Kombination der erfindungsgemäßen Vorrichtung {1) zur Optimierung einzelner solarer Kollektormodule und zusammengesetzter Kollektormodulgruppen gegen Umwelteinflüsse, insbesondere Wind, in im Wirkungsbereich des Kollektormoduls (6) befestigter beweglich ungleichförmiger Weise mitbewegter Montage. In der Schutzposition der einzelnen solaren Kollektormodule und zusammengesetzter Kollektormodulgruppen wirkt die Vorrichtung {Ia) als Schutz der bodennahen reflektierenden oder absorbierenden Module des Kollektors gegen in der Strömung mitgeführte Partikel und Gegenstände. Die ebenfalls nicht zur Erfindung gehörige Ausführung gemäß Fig. 2b zeigt den Aufbau für eine typische Betriebsposition. Im Operationsbereich wird die erfindungsgemäße Vorrichtung {Ia) in ungleichförmiger Weise so mitbewegt, dass bei minimaler Beeinträchtigung, z.B. durch Verschattung, eine optimierte Wirkung an Schutz vor Umwelteinflüssen, z.B. Wind und in der Strömung mitbewegter Teilchen, realisiert wird.

Fig. 3 zeigt in der rückwärtigen Ansicht den Aufbau einer Kombination der erfindungsgemäßen Vorrichtung zur Optimierung einzelner solarer Kollektormodule und zusammengesetzter Kollektormodulgruppen gegen Umwelteinflüsse, insbesondere Wind, einer Kombination der in den Figuren 1a und 1b als auch 2a und 2b dargestellten Vorrichtungen. Hierbei sind die möglichen, weiterhin ausgeführten Merkmale der erfindungsgemäßen Vorrichtung ebenfalls dargestellt. Die erfindungsgemäßen Vorrichtungen einerseits in fester Montage bzw. aktiv steuerbarer Ausführung (Ia) und frei beweglicher Montage (1b) sind jeweils durch Befestigungspunkte an der Grundstruktur des solaren Kollektors (6) befestigt. Entsprechende Vorrichtungen sind dabei segmentiert ausgeführt. Sie selbst können einerseits flach als auch gekrümmt ausgeführt werden. Zusätzlich ist die Integration von Sieb- oder Netzstrukturen möglich.

In zweiter Achse d.h. im vorliegenden Fall der Drehachse des solaren Kollektor (6) ist zusätzlich eine erfindungsgemäße Vorrichtung (1c) mittels Hilfsvorrichtung (3) am solaren Kollektor befestigt (6).

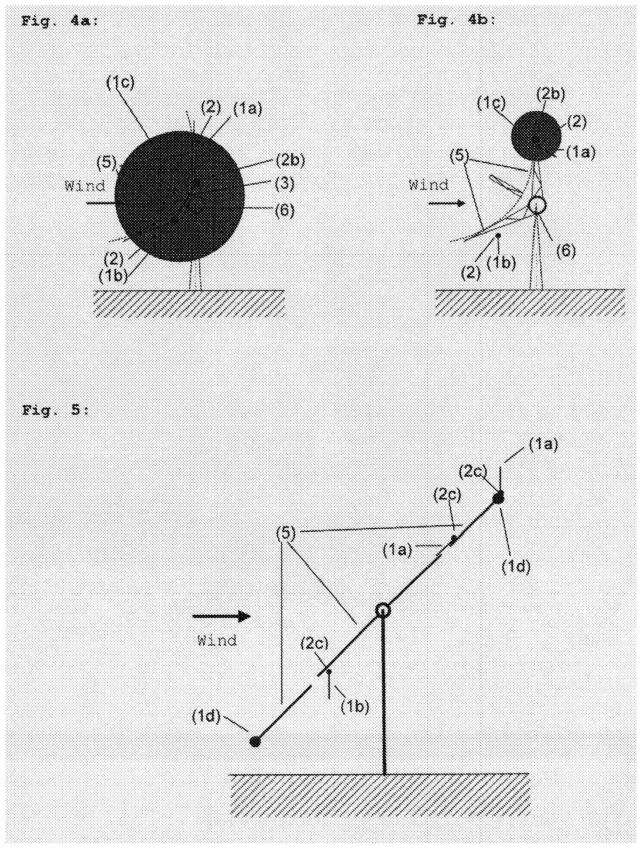

Fig. 4a und 4b zeigen in seitlicher Ansicht die Kombination der erfindungsgemäßen Vorrichtungen (1) in unterschiedlichen Drehachsen und unterschiedlicher Aufhängung.

Die als Siebstruktur ausgeführte erfindungsgemäße Vorrichtung (1c), welche durch eine Hilfsvorrichtung (2b) am solaren Kollektor (6) befestigt ist, verhindert bzw. optimiert die Umströmung des Kollektors insbesondere in Schräganströmung.

In Abhängigkeit der Kollektorkonfiguration kann die erfindungsgemäße Vorrichtung symmetrisch zur Drehachse des solaren Kollektors (6), dargestellt in Fig. 4a, oder unsymmetrisch, dargestellt in Fig. 4b, montiert werden.

Insbesondere durch die Veränderung bzw. Optimierung der Umströmung der Kanten der absorbierenden oder reflektierenden solaren Module (5) lassen sich so die instationären Belastungen auf die Module selbst als vor allem aber die Einwirkung auf die nachgelagerten Module durch ablösebedingte Wirbel stark verringern.

Fig. 5 zeigt die Seitenansicht eines Tragsystems zur Integration absorbierender oder reflektierender solaren Module (5), welche mit direkt an diese integrierten erfindungsgemäßen Vorrichtungen (1) versehen sind. Hierbei lässt sich sowohl die Umströmung der seitlichen Kanten durch erfindungsgemäße Vorrichtungen (1d) optimieren d.h. durch die Umströmung verursachte niedrigste und/oder höchste Druckdifferenzen stark abmindern als auch die Umströmung des Gesamtsystems d.h. des solaren Kollektors (6) durch passive oder aktive Ventilation durch fest montierte und/ oder aktiv steuerbare (1a) und frei bewegliche erfindungsgemäße Vorrichtungen (1b) optimieren. In der dargestellten Abbildung schwächt sich der Druck auf die Oberfläche der solaren Module (5) der unteren Kollektorfläche in entsprechender Betriebsstellung durch die Ventilation d.h. einen entstehenden Spalt stark ab. Die in der oberen Kollektorfläche eingesetzten erfindungsgemäßen Vorrichtungen (1a) optimieren die Gesamtdrehmomentbilanz des Aufbaus durch eine zusätzlich erzeugte Kraftkomponente durch die Versperrung der Öffnungen zwischen den solaren Modulen (5) als vor allem aber durch eine Kraftkomponente erzeugt durch die erfindungsgemäße Vorrichtung (1a) an der oberen Kollektorkante/am oberen solaren Modul.

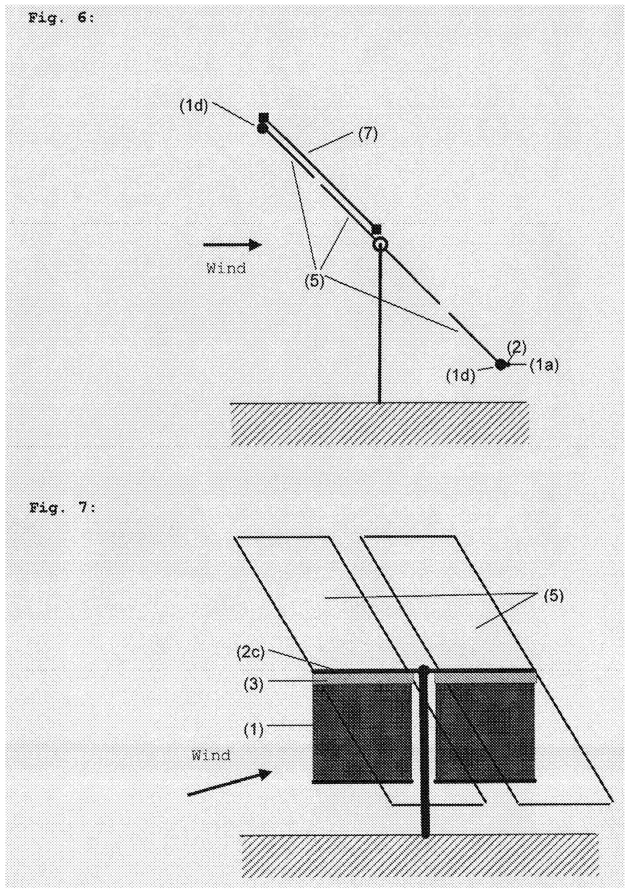

Fig. 6 zeigt die Seitenansicht eines Tragsystems zur Integration absorbierender oder reflektierender solaren Module (5), welches mit erfindungsgemäßen Vorrichtungen (1) versehen ist. Diese sind direkt an den solaren Modulen (5) montiert. In vorliegender Ausführung lassen sich die erfindungsgemäßen Vorrichtungen (1d) zur Optimierung der Umströmung des solaren Kollektors (6) gleichermaßen als Führungen für Hilfsgeräte (7), welche sich nicht dauerhaft im Wirkungsbereich des solaren Kollektors (6) befinden, nutzen.

Fig. 7 zeigt die Schrägansicht eines Tragsystems zur Integration absorbierender oder reflektierender solaren Module (5), welches mit erfindungsgemäßen Vorrichtungen (1) versehen ist. Diese sind mittels Hilfsvorrichtung (3) und Befestigungspunkten (2c) direkt an den solaren Modulen (5) montiert.

Durch die eingesetzten erfindungsgemäßen Vorrichtungen (1), welche im vorliegenden Anwendungsfall durch Netz- und Siebstrukturen und in Kombination und zusätzlich mit einer Vorrichtung zur Aufnahme oder Befestigung oder Aufnahme und Befestigung von festen, flüssigen oder gasförmigen Stoffen ausgeführt sind, wird durch die teilweise Unterdrückung der Unterströmung des solaren Kollektors (6) insgesamt die Strömung stabilisiert bei eine Minimierung der auf den Aufbau wirkenden Lasten und Momente.

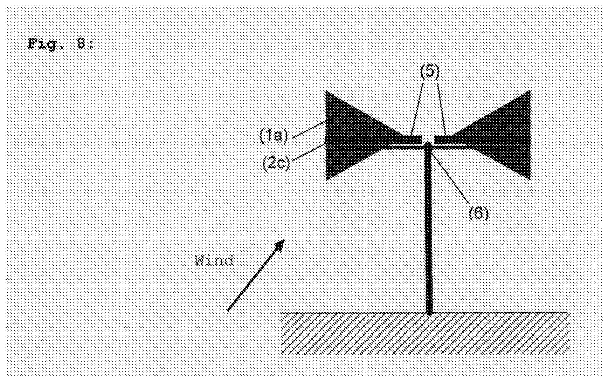

Fig. 8 zeigt in Seitenansicht das Tragsystems zur Integration absorbierender oder reflektierender solaren Module (5), welches mit erfindungsgemäßen Vorrichtungen {1) versehen ist. Diese sind mittels Befestigungspunkten (2c) direkt an den solaren Modulen (5) montiert.

Die Vorrichtung ist in diesem Ausführungsfall als Dreiecksgeometrie einer Kombination von Sieb- und Plattenstrukturen ausgeführt. Für den vorliegenden Betriebsfall d.h. die Sicherungsposition des solaren Kollektors (6) bedeutet dies, dass die an den scharfen Kanten der solaren Module (5) entstehenden instationären Strömungsanteile d.h. Wirbelablösung und damit einhergehende hohe Auftriebs- und Abtriebsbelastungen nahezu komplett unterdrückt werden. Zusätzlich werden die in der Anströmung durch natürliche Turbulenz oder ggf. durch vorgelagerte Aufbauten auf den solaren Kollektor (6) einwirkenden Schwankungen in der Windanströmung je nach Versperrungsgrad/Porosität der erfindungsgemäßen Vorrichtung (1a) teilweise oder komplett unterdrückt.

### Erläuterungen der Bezugszeichen

- 1: erfindungsgemäße Vorrichtung -generell
- 1a: Teilkörper der erfindungsgemäßen Vorrichtung, fest montiert und/oder aktiv steuerbar
- 1b: Teilkörper der erfindungsgemäßen Vorrichtung, frei beweglich montiert
- 1c: Teilkörper der erfindungsgemäßen Vorrichtung, in zweiter Achse montiert, starr, steuerbar oder frei beweglich
- 1d: Teilkörper der erfindungsgemäßen Vorrichtung, starr, steuerbar oder beweglich ausgeführt, als Führung für Hilfsgräte (7) nutzbar
- 2: Anflanschungs-/Befestigungspunkt -generell
- 2a: Anflanschungs-/Befestigungspunkt, bodenmontiert im Wirkungsbereich des solaren Kollektors (6)
- 2b: Anflanschungs-/Befestigungspunkt, montiert an mechanischer Aufständerung (4) und/oder an Hilfsvorrichtung (3) im Wirkungsbereich des solaren Kollektors (6)
- 2c: Anflanschungs-/Befestigungspunkt, montiert am absorbierenden oder reflektierenden solaren Modul (5) oder am solaren Kollektor (6)
- 3: Hilfsvorrichtung zur Befestigung der erfindungsgemäßen Vorrichtung (1)
- 4: mechanische Aufständerung (en)
- 5: absorbierendes oder reflektierendes, solares Modul
- 6: solarer Kollektor
- 7: Hilfsgerät, welches sich nicht dauerhaft im Wirkungsbereich des solarer Kollektors (6) befindet

## Patentansprüche

1. Anordnung aus einem solaren Kollektormodul, bestehend aus reflektierenden oder absorbierenden Modulen und einer Vorrichtung (1) zum Schutz des solaren Kollektormoduls (5, 6) gegen Wind und mit dem Wind mitbewegte Partikel und Gegenstände, wobei die Vorrichtung (1) aus zwei Teilkörpern besteht, die an mechanischen Anflanschungs- oder Befestigungspunkten (2) montiert sind, die am solaren Kollektormodul (5, 6) ausgebildet sind, wobei die Vorrichtung (1) im Operationsbereich des solaren Kollektormoduls (5, 6) montiert ist und im Operationsbereich des solaren Kollektormoduls (5, 6) gleichförmig oder ungleichförmig zu einer Bewegung des solaren Kollektormoduls (5, 6) mitbewegt bzw. bewegt wird,
**dadurch gekennzeichnet dass**, ein erster Teilkörper (1b) flexibel an mindestens einem Anflanschungs- oder Befestigungspunkt (2) montiert ist, um in einer Schutzposition des solaren Kollektormoduls (5, 6) als Schutz der bodennahen Module des Kollektors gegen in einer Strömung mitgeführte Partikel und Gegenstände zu wirken sowie in einer Betriebsposition eine Minimierung der Unterströmung zu erzeugen, und ein zweiter Teilkörper (1a) starr an mindestens einem Anflanschungs- oder Befestigungspunkt (2) montiert ist und mit dem solaren Kollektormodul (5, 6) mitbewegt wird um in einer Schutzposition des solaren Kollektormoduls (5, 6) für eine gleichbleibend optimierte Umströmung der Kollektoroberkante zu sorgen, sodass in Reaktion auf den statischen und/oder dynamischen Einfluss des Windes der Betrieb des solaren Moduls geschützt und/oder stabilisiert werden kann

2. Anordnung nach Anspruch 1, **dadurch gekennzeichnet, dass** die Vorrichtung (1) eingerichtet ist, symmetrisch oder unsymmetrisch zum solaren Kollektormodul (5, 6) aufgebaut zu sein und dabei selbst sowohl eine gleichförmige oder ungleichförmige Geometrie als auch gleichförmige oder ungleichförmige Beschaffenheit in ihrer Streckung in unterschiedlichen Raumrichtungen aufweist.

3. Anordnung nach Anspruch 1 und Anspruch 2, **dadurch gekennzeichnet, dass** die Vorrichtung (1) eingerichtet ist, in einer oder mehreren zusätzlichen Achsen montiert und bewegt zu werden.

4. Anordnung nach Ansprüchen 1 bis 3, **dadurch gekennzeichnet, dass** die Vorrichtung (1) segmentiert ausgeführt ist.

5. Anordnung nach Anspruch 1 bis Anspruch 4, **dadurch gekennzeichnet, dass** das Material der Vorrichtung (1) transparent, wetterfest und UV-stabil ist.

6. Anordnung nach Anspruch 1 und 2, **dadurch gekennzeichnet, dass** durch die Vorrichtung (1) erzeugte Kräfte und/oder Momente in Richtung oder entgegen der Richtung des ursächlichen Umwelteinflusses wirken können.

7. Anordnung nach Anspruch 1 bis 6, **dadurch gekennzeichnet, dass** die Vorrichtung (1) eingerichtet ist, unter Last, d.h. durch einwirkende Umwelteinflüsse, ihre Geometrie und/oder Lage zu verändern.

8. Anordnung nach Ansprüchen 1 bis 7, **dadurch gekennzeichnet, dass** die Vorrichtung (1) aus Leichtbaukomponenten und -Werkstoffen, z.B. CFK, GFK, Aramid, Aluminium und deren Verbundaufbauten in unterschiedlichen Werkstoffkombinationen, aufgebaut ist.

9. Anordnung nach Ansprüchen 1 bis 8, **dadurch gekennzeichnet, dass** die Vorrichtung (1) zur Variation des Versperrungsgrades inhomogen aufgebaut ist, wobei hierzu Spalten, Schlitze, Lochungen und/oder Folien-, Netz-, Sieb- oder Zaunelemente unterschiedlichen Versperrungsgrades integriert sind, sodass sich beliebige Kombinationen an Versperrung ausführen lassen. -

10. Anordnung nach Ansprüchen 1 bis 9, **dadurch gekennzeichnet, dass** die Vorrichtung (1) als Vorrichtung zur Aufnahme oder Befestigung oder Aufnahme und Befestigung von festen, flüssigen oder gasförmigen Stoffen ausgeführt ist.

11. Anordnung nach Anspruch 10, **dadurch gekennzeichnet, dass** der Füllstand der festen, flüssigen oder gasförmigen Stoffe oder die Gewichtslast der zu befestigenden festen Stoffe individuell nach zu erwartendem Lastfall im Operationswinkelbereich bzw. entsprechenden Reaktionskräften und Momenten auf die Umwelteinflüsse einstellbar ist.

12. Anordnung nach Anspruch 1 bis 11, **dadurch gekennzeichnet, dass** die Vorrichtung (1) durch die Integration zusätzlicher Hilfsvorrichtungen (3) und/oder selbst als Führung und/oder Unterstützung für zusätzliche Einrichtungen und Geräte (7), welche sich nicht dauerhaft im Wirkungsbereich des solaren Kollektormoduls (5, 6) befinden wie insbesondere zur Wartung, Reparatur, Reinigung und/oder Messeinrichtungen dienen.

## Claims

1. Arrangement comprising a solar collector module comprising reflective or absorbent modules and a device (1) for protecting the solar collector module (5, 6) against wind and particles and objects which are moved by the wind, wherein the device (1) comprises two part-members which are mounted at mechanical flanging or securing locations (2) which are formed on the solar collector module (5, 6), wherein the device (1) is mounted in the operating region of the solar collector module (5, 6) and is entrained or moved in the operating region of the solar collector module (5, 6) in a uniform or non-uniform manner to carry out a movement of the solar collector module (5, 6),
**characterised in that** a first part-member (1b) is mounted in a flexible manner on at least one flanging or securing location (2) in order in a protection position of the solar collector module (5, 6) to act as protection of the modules of the collector close to the ground against particles and objects which are carried in a flow and in an operating position to produce a minimisation of the undercurrent, and a second part-member (1a) is rigidly mounted on at least one flanging or securing location (2) and is moved with the solar collector module (5, 6) in order in a protection position of the solar collector module (5, 6) to ensure a consistently optimised flow around the upper collector edge so that in response to the static and/or dynamic influence of the wind the operation of the solar module can be protected and/or stabilised.

2. Arrangement according to claim 1, **characterised in that** the device (1) is configured to be constructed symmetrically or asymmetrically with respect to the solar collector module (5, 6) and in this instance has both a uniform or non-uniform geometry and uniform or non-uniform character in the extension thereof in different spatial directions.

3. Arrangement according to claim 1 and claim 2, **characterised in that** the device (1) is configured to be mounted and moved in one or more additional axes.

4. Arrangement according to claims 1 to 3, **characterised in that** the device (1) is constructed in a segmented manner.

5. Arrangement according to claim 1 to claim 4, **characterised in that** the material of the device (1) is transparent, weather-resistant and UV-stable.

6. Arrangement according to claim 1 and 2, **characterised in that** forces and/or torques produced by the device (1) can act in the direction of or counter to the direction of the causal environmental influence.

7. Arrangement according to claim 1 to 6, **characterised in that** the device (1) is configured to change its geometry and/or position under load, that is to say, as a result of acting environmental influences.

8. Arrangement according to claims 1 to 7, **characterised in that** the device (1) is constructed from lightweight components and materials, for example, CFRP, GRP, aramid, aluminium and the composite structures thereof in different material combinations.

9. Arrangement according to claims 1 to 8, **characterised in that** the device (1) is constructed in a non-homogenous manner to vary the degree of blocking, wherein to this end gaps, slots, holes and or film, netting, mesh or fence elements with different degrees of blocking are integrated so that any combinations of blocking can be carried out.

10. Arrangement according to claims 1 to 9, **characterised in that** the device (1) is constructed as a device for receiving or securing or receiving and securing solid, liquid or gaseous materials.

11. Arrangement according to claim 10, **characterised in that** the filling level of the solid, liquid or gaseous materials or the weight load of the solids to be secured can be adjusted individually in accordance with the load to be anticipated in the operating angle range or corresponding reaction forces and torques to the environmental influences.

12. Arrangement according to claim 1 to 11, **characterised in that** the device (1) as a result of the integration of additional auxiliary devices (3) and/or itself is used as a guide and/or support for additional devices and apparatuses (7) which are not permanently located in the active region of the solar collector module (5, 6), such as in particular for maintenance, repair, cleaning and/or measuring devices.

## Revendications

1. Agencement d'un module collecteur solaire, se composant de modules réfléchissants ou absorbants et d'un dispositif (1) pour la protection du module collecteur solaire (5, 6) contre le vent et des particules et objets déplacés avec le vent, dans lequel le dispositif (1) se compose de deux corps partiels qui sont montés sur des points de bridage ou de fixation (2) mécaniques qui sont réalisés au niveau du module collecteur solaire (5, 6), dans lequel le dispositif (1) est monté dans la zone d'opération du module collecteur solaire (5, 6) et se déplace ou est déplacé dans la zone d'opération du module collecteur solaire (5, 6) uniformément ou non uniformément à un mouvement du module collecteur solaire (5, 6),
**caractérisé en ce qu'**un premier corps partiel (1b) est monté de manière flexible sur au moins un point de bridage ou de fixation (2) pour agir, dans une position de protection du module collecteur solaire (5, 6), en tant que protection des modules proches du sol du collecteur contre des particules et objets entraînés dans un écoulement ainsi que pour générer, dans une position de fonctionnement, une minimisation de l'écoulement de fond, et un second corps partiel (1a) est monté rigidement sur au moins un point de bridage ou de fixation (2) et est déplacé avec le module collecteur solaire (5, 6) pour veiller, dans une position de protection du module collecteur solaire (5, 6), à un écoulement optimisé de manière constante de l'arête supérieure de collecteur de sorte qu'en réaction à l'influence statique et/ou dynamique du vent le fonctionnement du module solaire puisse être protégé et/ou stabilisé.

2. Agencement selon la revendication 1, **caractérisé en ce que** le dispositif (1) est conçu pour être constitué symétriquement ou asymétriquement au module collecteur solaire (5, 6) et présente lui-même non seulement une géométrie uniforme ou non uniforme mais aussi une nature uniforme ou non uniforme dans son extension dans différentes directions spatiales.

3. Agencement selon la revendication 1 et la revendication 2, **caractérisé en ce que** le dispositif (1) est conçu pour être monté et déplacé dans un ou plusieurs axes supplémentaires.

4. Agencement selon les revendications 1 à 3, **caractérisé en ce que** le dispositif (1) est réalisé segmenté.

5. Agencement selon la revendication 1 à la revendication 4, **caractérisé en ce que** le matériau du dispositif (1) est transparent, résistant aux intempéries et stable aux UV.

6. Agencement selon les revendications 1 et 2, **caractérisé en ce que** des forces et/ou des couples générés par le dispositif (1) peuvent agir dans la direction ou dans la direction inverse de l'influence environnementale causale.

7. Agencement selon les revendications 1 à 6, **caractérisé en ce que** le dispositif (1) est conçu pour modifier sous charge, c'est-à-dire par des influences environnementales agissantes, sa géométrie et/ou position.

8. Agencement selon les revendications 1 à 7, **caractérisé en ce que** le dispositif (1) est constitué de composants et matériaux légers, par exemple CFK, GFK, aramide, aluminium et leurs structures composites dans différentes combinaisons de matériau.

9. Agencement selon les revendications 1 à 8, **caractérisé en ce que** le dispositif (1) est constitué, pour la variation du degré de blocage, de manière non homogène, dans lequel des colonnes, des fentes, des perforations et/ou des éléments de film, de filet, de tamis ou de clôture de différent degré de blocage sont intégrés à celui-ci de sorte que des combinaisons quelconques de blocage puissent être réalisées.

10. Agencement selon les revendications 1 à 9, **caractérisé en ce que** le dispositif (1) est réalisé en tant que dispositif pour la réception ou la fixation ou la réception et la fixation de substances solides, liquides ou gazeuses.

11. Agencement selon la revendication 10, **caractérisé en ce que** le niveau de remplissage des substances solides, liquides ou gazeuses ou la charge pondérale des substances solides à fixer est réglable individuellement selon le cas de charge à attendre dans la plage d'angle d'opération ou les forces de réaction correspondantes et couples sur les influences environnementales.

12. Agencement selon les revendications 1 à 11, **caractérisé en ce que** le dispositif (1) sert, par l'intégration de dispositifs auxiliaires (3) supplémentaires et/ou même en tant que guidage et/ou soutien, pour des dispositifs et appareils supplémentaires (7) qui ne se trouvent pas durablement dans le champ d'action du module collecteur solaire (5, 6) comme en particulier à la maintenance, réparation, nettoyage et/ou dispositifs de mesure.
